# EUROPÄISCHE PATENTSCHRIFT

(11) **EP 1 812 484 B1**
(45) Veröffentlichungstag und Bekanntmachung des Hinweises auf die Patenterteilung: **03.12.2008**
(21) Anmeldenummer: 05807885.8
(22) Anmeldetag: 03.11.2005
(51) Int. Cl.: C08F 285/00, C08F 292/00, C08K 9/00

(54) **KERN-MANTEL-PARTIKEL**
CORE-SHELL PARTICLES
PARTICULE DE TYPE NOYAU-ENVELOPPE

(30) Priorität: 16.11.2004 DE 102004055303
(43) Veröffentlichungstag der Anmeldung: 01.08.2007
(73) Patentinhaber: Merck Patent GmbH, 64293 Darmstadt (DE)
(72) Erfinder: WINKLER, Holger, 64291 Darmstadt (DE); BAUER, Josef, A-2245 Velm-Goetzendorf (AT); SCHNEIDER, René, 64546 Mörfelden-Walldorf (DE); WEIGANDT, Corinna, 64293 Darmstadt (DE); HEYNE, Joachim, 67117 Limburgerhof (DE); GOERLITZER, Hans, 63303 Dreieich (DE); STASCHIK, Dorothea, 61130 Nidderau (DE); GOLDITZ, Christian, 63628 Bad Soden-Salmünster (DE)
(86) Internationale Anmeldenummer: PCT/EP2005/011740
(87) Internationale Veröffentlichungsnummer: WO 2006/053640

(56) Entgegenhaltungen:
- EP-A- 0 374 814
- WO-A-03/025035
- US-A- 4 508 875
- US-A- 5 856 379
- US-A1- 2004 054 063

## Beschreibung

Die Erfindung betrifft Granulate bzw. Dispersionen enthaltend Kern-Mantel-Partikel, sowie die Kern-Mantel-Partikel und Verfahren zur Herstellung der Granulate bzw. Dispersionen bzw. Kern-Mantel-Partikel.

Aus der Patentanmeldung WO 03/25035 sind Formkörper bekannt, die im wesentlichen aus Kern-Mantel-Partikeln, deren Mantel eine Matrix bildet und deren Kern im wesentlichen fest ist und eine im wesentlichen monodisperse Größenverteilung aufweist, bestehen, wobei der Mantel vorzugsweise über eine Zwischenschicht fest mit dem Kern verbunden ist. Dabei unterscheiden sich die Brechungsindices des Kernmaterials und des Mantelmaterials, wodurch besagter optischer Effekt, vorzugsweise eine Opaleszenz entsteht. In einer bevorzugte Ausführungsform gemäß WO 03/25035 besteht der Kern der Kern-Mantel-Partikel aus vernetztem Polystyrol und der Mantel aus einem Polyacrylat, vorzugsweise Polyethylacrylat, Polybutylacrylat, Polymethylmethacrylat und/oder einem Copolymeren davon.

Gemäß der Patentanmeldung DE 10204338 können in Formkörper solcher Kern-Mantel-Partikel zusätzlich Kontrastmaterialen, wie Pigmente, eingebracht werden. Die eingelagerten Kontrastmaterialien bewirken eine Zunahme von Brillianz, Kontrast und Tiefe der beobachteten Farbeffekte bei diesen Formkörpern.

Es besteht dennoch Bedarf nach Kern-Mantel-Partikeln für photonische Materialien mit optimierten optischen Eigenschaften. Zudem eignen sich die bekannten Kern-Mantel-Partikel nur bedingt zur großtechnischen Verarbeitung mit in der Polymerindustrie üblichen Methoden.

Aufgabe der vorliegenden Erfindung war es, Kern-Mantel-Partikel zu Verfügung zu stellen, die mit großtechnischen Verarbeitungsmethoden verarbeitet werden können und/oder optimierte optische Eigenschaften aufweisen.

Ein erster Gegenstand der vorliegenden Erfindung sind daher Kern-Mantel-Partikel, deren Kern im wesentlichen fest ist und eine im wesentlichen monodisperse Größenverteilung aufweist, wobei ein Unterschied zwischen den Brechungsindices des Kernmaterials und des Mantelmaterials besteht und der Kern aus einem Material besteht, das entweder nicht oder bei einer Temperatur oberhalb der Fließtemperatur des Mantelmaterials fließfähig wird und der Mantel mit dem Kern über eine Zwischenschicht verbunden ist, dadurch gekennzeichnet, dass der Mantel aus einem Copolymeren besteht, welches mindestens ein C₄-C₈-Alkylacrylat und mindestens ein C₄-C₈-Alkyl- oder -Alkyl-aryl-methacrylat als Monomerbausteine enthält.

Weitere Gegenstände der vorliegenden Erfindung sind Granulate, enthaltend die erfindungsgemäßen Kern-Mantel-Partikel und gegebenenfalls Hilfs- und Zusatzstoffe, sowie Dispersionen enthaltend enthaltend die erfindungsgemäßen Kern-Mantel-Partikel und mindestens ein Lösungs- oder Dispergiermittel und gegebenenfalls Dispergierhilfsmittel, sowie entsprechende Herstellverfahren.

Der Mantel der Kern-Mantel-Partikel enthält in einer bevorzugten Erfindungsvariante 10 bis 70 Gew.-%, vorzugsweise 25 bis 60 Gew.-% und insbesondere bevorzugt 35 bis 55 Gew.-% C₄-C₈-Alkylacrylat , 10 bis 80 Gew.-%, vorzugsweise 25 bis 70 Gew.-% und insbesondere bevorzugt 35 bis 60 Gew.-% C₄-C₈-Alkyl- oder -Alkyl-aryl-methacrylat und 0,5 bis 40 Gew.-%, vorzugsweise 1 bis 30 Gew.-% und insbesondere bevorzugt 5 bis 20 Gew.-% Methylmethacrylat. jeweils bezogen auf das Gewichtsverhältnis der Monomerbausteine als Monomerbausteine.

Dabei ist es insbesondere bevorzugt, wenn das mindestens eine C₄-C₈-Alkylacrylat ausgewählt ist aus der Gruppe n-Butylacrylat, iso-Butylacrylat, sec-Butylacrylat, n-Propylacrylat, n-Pentylacrylat, n-Hexylacrylat, n-Octylacrylat, wobei das mindestens eine C₄-C₈-Alkylacrylat vorzugsweise n-Butylacrylat ist.

Das mindestens eine C₄-C₈-Alkyl- oder -Alkyl-aryl-methacrylat ist vorzugsweise ausgewählt aus der Gruppe n-Butylmethacrylat, iso-Butylmethacrylat, sec-Butylmethacrylat, n-Propylmethacrylat, n-Pentylmethacrylat, n-Hexylmethacrylat, Cyclohexylmethacrylat, n-Octylmethacrylat, Benzylmethacrylat, wobei das mindestens eine C₄-C₈-Alkylacrylat vorzugsweise n-Butylmethacrylat ist.

Ganz besonders bevorzugt ist es erfindungsgemäß dabei, wenn der Mantel von einem statistischen Copolymer gebildet wird, welches vorzugsweise aus n-Butylacrylat, n-Butylmethacrylat und Methylmethacrylat aufgebaut ist.

Dabei weisen die erfindungsgemäßen Kern-Mantel-Partikel insbesondere folgende Vorteile auf:
- Dispersionen der erfindungsgemäßen Kern-Mantel-Partikel sind scherstabil. Die Dispersionen lassen sich durch Pumpen fördern. Es erfolgt keine unerwünschte Koagulation.
- Die Partikel sind annähernd Geruchsneutral. Im Vergleich zu Kern-Mantel-Partikeln mit Ethylacrylat-haltigem Mantel die zu einem stechenden Geruch neigen, entfällt dadurch bei der Herstellung die aufwändige Reinigung der Produkte von Restmonomeren. In der Praxis führt die Entfernung der Ethylacrylat-Restmonomere über eine Nachinitiereung und Auspolymerisation der Restmonomere zu einer deutlichen Verschlechterung der Verarbeitungseigenschaften der Ethylacrylat-haltigen Kern-Mantel-Partikel. Diese Verschlechterung kann mit den erfindungsgemäßen Partikeln vermieden werden.
- Zudem zeigen Formkörper aus den erfindungsgemäßen Partikeln eine erhöhte Brillanz der Farbeffekte.
- Die mechanische Belastbarkeit der erfindungsgemäß herstellbaren Formkörper ist im Vergleich zum Stand der Technik verbessert.

Bei der Zwischenschicht handelt es sich in einer bevorzugten Ausführungsform der Erfindung um eine Schicht vernetzter oder zumindest teilweise vernetzter Polymere. Dabei kann die Vernetzung der Zwischenschicht über freie Radikale, beispielsweise induziert durch UV-Bestrahlung, oder vorzugsweise über di- bzw. oligofunktionelle Monomere erfolgen. Bevorzugte Zwischenschichten dieser Ausführungsform enthalten 0,01 bis 100 Gew.-%, insbesondere bevorzugt 0,25 bis 10 Gew.-%, di- bzw. oligofunktionelle Monomere. Bevorzugte di- bzw. oligofunktionelle Monomere sind insbesondere Isopren und Allylmethacrylat (ALMA). Eine solche Zwischenschicht vernetzter oder zumindest teilweise vernetzter Polymere hat vorzugsweise eine Dicke im Bereich von 10 bis 20 nm. Fällt die Zwischenschicht dicker aus, so wird der Brechungsindex der Schicht so gewählt, dass er entweder dem Brechungsindex des Kernes oder dem Brechungsindex des Mantels entspricht.

Werden als Zwischenschicht Copolymere eingesetzt, die, wie oben beschrieben, ein vernetzbares Monomer enthalten, so bereitet es dem Fachmann keinerlei Probleme, entsprechende copolymerisierbare Monomere geeignet auszuwählen. Beispielsweise können entsprechende copolymerisierbare Monomere aus einem sogenannten Q-e-Schema ausgewählt werden (vgl. Lehrbücher der Makromolekularen Chemie). So können mit ALMA vorzugsweise Monomere, wie Methylmethacrylat und Acrylsäuremethylester polymerisiert werden.

In einer anderen, ebenfalls bevorzugten Ausführungsform der vorliegenden Erfindung, werden die Mantelpolymere direkt, über eine entsprechende Funktionalisierung des Kernes, an den Kern aufgepfropft. Die Oberflächenfunktionalisierung des Kernes bildet dabei die erfindungsgemäße Zwischenschicht. Die Art der Oberflächenfunktionalisierung richtet sich dabei hauptsächlich nach dem Material des Kernes. Siliciumdioxid-Oberflächen können beispielsweise mit Silanen, die entsprechend reaktive Endgruppen tragen, wie Epoxyfunktionen oder freien Doppelbindungen, geeignet modifiziert werden. Andere Oberflächenfunktionalisierungen, beispielsweise für Metalloxide, können Titanate oder Aluminiumorganyle sein, die jeweils organische Seitenketten mit entsprechenden Funktionen enthalten. Bei polymeren Kernen kann zur Oberflächenmodifizierung beispielsweise ein am Aromaten funktionalisiertes Styrol, wie Bromstyrol, eingesetzt werden. Über diese Funktionalisierung kann dann das Aufwachsen der Mantelpolymeren erreicht werden. Insbesondere kann die Zwischenschicht auch über ionische Wechselwirkungen oder Komplexbindungen eine Haftung des Mantels am Kern bewirken.

Der Kern der Kern-Mantel-Partikel besteht aus einem Material, das entweder nicht oder bei einer Temperatur oberhalb der Fließtemperatur des Mantelmaterials fließfähig wird. Dies kann erreicht werden durch den Einsatz polymerer Materialien mit entsprechend hoher Glasübergangstemperatur (T_{g}), vorzugsweise vernetzter Polymere bzw. durch Einsatz anorganischer Kernmaterialien.

In einer bevorzugten Erfindungsvariante besteht der Kern aus einem anorganischen Material, vorzugsweise einem Metall oder Halbmetall oder einem Metallchalcogenid oder Metallpnictid. Als Chalcogenide werden im Sinne der vorliegenden Erfindung solche Verbindungen bezeichnet, in denen ein Element der 16. Gruppe des Periodensystems der elektronegative Bindungspartner ist; als Pnictide solche, in denen ein Element der 15. Gruppe des Periodensystems der elektronegative Bindungspartner ist.

Bevorzugte Kerne bestehen aus Metallchalcogeniden, vorzugsweise Metalloxiden, oder Metallpnictiden, vorzugsweise Nitriden oder Phosphiden. Metall im Sinne dieser Begriffe sind dabei alle Elemente, die im Vergleich zu den Gegenionen als elektropositiver Partner auftreten können, wie die klassischen Metalle der Nebengruppen, beziehungsweise die Hauptgruppenmetalle der ersten und zweiten Hauptgruppe, genauso jedoch auch alle Elemente der dritten Hauptgruppe, sowie Silicium, Germanium, Zinn, Blei, Phosphor, Arsen, Antimon und Bismuth. Zu den bevorzugten Metallchalcogeniden und Metallpnictiden gehören insbesondere Silciumdioxid, Aluminiumoxid, Galliumnitrid, Bor- und Aluminiumnitrid sowie Silicium- und Phosphornitrid.

Als Ausgangsmaterial für die Herstellung der erfindungsgemäßen Kern-Mantel-Partikel werden in einer Variante der vorliegenden Erfindung bevorzugt monodisperse Kerne aus Siliciumdioxid eingesetzt, die beispielsweise nach dem in US 4 911 903 beschriebenen Verfahren erhalten werden können. Die Kerne werden dabei durch hydrolytische Polykondensation von Tetraalkoxysilanen in einem wäßrigammoniakalischen Medium hergestellt, wobei man zunächst ein Sol von Primärteilchen erzeugt und anschließend durch ein kontinuierliches, kontrolliertes Zudosieren von Tetraalkoxysilan die erhaltenen SiO₂-Partikel auf die gewünschte Teilchengröße bringt. Mit diesem Verfahren sind monodisperse SiO₂-Kerne mit mittleren Teilchendurchmessern zwischen 0,05 und 10 µm bei einer Standardabweichung von 5 % herstellbar.

Weiterhin sind als Ausgangsmaterial SiO₂-Kern bevorzugt, die mit (Halb)Metallen oder im sichtbaren Bereich nichtabsorbierenden Metalloxiden, wie z.B. TiO₂, ZrO₂, ZnO₂, SnO₂ oder Al₂O₃, beschichtet sind. Die Herstellung von mit Metalloxiden beschichteter SiO₂-Kerne ist beispielsweise in US 5 846 310, DE 198 42 134 und DE 199 29 109 näher beschrieben.

Als Ausgangsmaterial sind auch monodisperse Kerne aus nichtabsorbierenden Metalloxiden wie TiO₂, ZrO₂, ZnO₂, SnO₂ oder Al₂O₃ oder Metalloxidgemischen einsetzbar. Ihre Herstellung ist beispielsweise in EP 0 644 914 beschrieben. Weiterhin ist das Verfahren gemäß EP 0 216 278 zur Herstellung monodisperser SiO₂-Kerne ohne weiteres und mit gleichem Ergebnis auf andere Oxide übertragbar. Zu einem Gemisch aus Alkohol, Wasser und Ammoniak, dessen Temperatur mit einem Thermostaten auf 30 bis 40 °C genau eingestellt wird, werden unter intensiver Durchmischung Tetraethoxysilan, Tetrabutoxytitan, Tetrapropoxyzirkon oder deren Gemische in einem Guss zugegeben und die erhaltene Mischung für weitere 20 Sekunden intensiv gerührt, wobei sich eine Suspension von monodispersen Kerne im Nanometerbereich ausbildet. Nach einer Nachreaktionszeit von 1 bis 2 Stunden werden die Kerne auf die übliche Weise, z.B. durch Zentrifugieren, abgetrennt, gewaschen und getrocknet.

Weiterhin sind als Ausgangsmaterial für die Herstellung der erfindungsgemäßen Kern-Mantel-Partikel auch monodisperse Kerne aus Polymeren geeignet, die Partikel, beispielsweise Metalloxide, eingeschlossen enthalten. Solche Materialien werden beispielsweise von der Firma micro caps Entwicklungs- und Vertriebs GmbH in Rostock angeboten. Nach kundenspezifischen Anforderungen werden Mikroverkapselungen auf der Basis von Polyestern, Polyamiden und natürlichen und modifizierten Kohlenhydraten gefertigt.

Einsetzbar sind weiterhin monodisperse Kerne aus Metalloxiden, die mit organischen Materialien, beispielsweise Silanen, beschichtet sind. Die monodispersen Kerne werden in Alkoholen dispergiert und mit gängigen Organoalkoxysilanen modifiziert. Die Silanisierung sphärischer Oxidpartikel ist auch in DE 43 16 814 beschrieben. Dabei bilden die Silane vorzugsweise die o.g. Zwischenschicht.

Für die beabsichtigte Verwendung der erfindungsgemäßen Kern/Mantel-Partikel zur Herstellung von Formkörpern ist es wichtig, dass das Mantelmaterial verfilmbar ist, d. h., dass es durch einfache Maßnahmen soweit erweicht, visco-elastisch plastifiziert oder verflüssigt werden kann, dass die Kerne der Kern/Mantel-Partikel zumindest Domänen regelmäßiger Anordnung ausbilden können. Die in der durch Verfilmung der Mantel der Kern/Mantel-Partikel gebildeten Matrix regelmäßig angeordneten Kerne bilden ein Beugungsgitter, das Interferenzerscheinungen hervorruft und dadurch zu sehr interessanten Farbeffekten führt.

Im Hinblick auf die Möglichkeit, die erfindungsrelevanten Eigenschaften der Kerne der erfindungsgemäßen Kern/Mantel-Partikel nach Bedarf zu variieren ist es jedoch oft zweckmäßig, wenn die Kerne ein oder mehrere Polymere und/oder Copolymere (Kern-Polymere) enthalten oder sie aus solchen Polymeren bestehen.

Daher ist es in einer Erfindungsvariante insbesondere bevorzugt, wenn der Kern aus organischen Homo- oder Co-Polymeren, die vorzugsweise vernetzt sind, besteht.

Vorzugsweise enthalten die Kerne ein einziges Polymer oder Copolymer. Erfindungsgemäß insbesondere bevorzugt besteht der Kern dabei aus vernetztem Polystyrol oder einem Copolymeren aus Methylmethacrylat und Styrol.

Mit der Verwendung von Polymersubstanzen als Kernmaterial gewinnt der Fachmann die Freiheit deren relevante Eigenschaften, wie z. B. ihre Zusammensetzung, die Teilchengröße, die mechanischen Daten, den Brechungsindex, die Glasübergangstemperatur, den Schmelzpunkt und das Gewichtsverhältnis von Kern:Mantel und damit auch die anwendungstechnischen Eigenschaften der Kern/Mantel-Partikel festzulegen, die sich letztlich auch auf die Eigenschaften der daraus hergestellten Formkörper auswirken.

Polymere und/oder Copolymere, die in dem Kernmaterial enthalten sein können oder aus denen es besteht, sich hochmolekulare Verbindungen, die der oben für das Kernmaterial gegebenen Spezifikation entsprechen. Geeignet sind sowohl Polymerisate und Copolymerisate polymerisierbarer ungesättigten Monomerer als auch Polykondensate und Copolykondensate von Monomeren mit mindestens zwei reaktiven Gruppen, wie z. B. hochmolekulare aliphatische, aliphatisch/aromatische oder vollaromatische Polyester, Polyamide, Polycarbonate, Polyharnstoffe und Polyurethane, aber auch Aminoplast- und Phenoplast-Harze, wie z. B. Melamin/Formaldehyd-, Harnstoff/Formaldehyd- und Phenol/Formaldehy-Kondensate.

Zur Herstellung von Epoxidharzen, die ebenfalls als Kernmaterial geeignet sind, werden üblicherweise Epoxid-Präpolymerisate, die beispielsweise durch Reaktion von Bisphenol A oder anderen Bisphenolen, Resorcin, Hydrochinon, Hexandiol, oder anderen aromatischen oder aliphatischen Di- oder Polyolen, oder Phenol-Formaldehyd-Kondensaten, oder deren Mischungen untereinander mit Epichlorhydrin, oder anderen Di- oder Polyepoxiden erhalten werden, mit weiteren zur Kondensation befähigten Verbindungen direkt oder in Lösung vermischt und aushärten gelassen.

Zweckmäßigerweise sind die Polymeren des Kernmaterials in einer bevorzugten Erfindungsvariante vernetzte (Co-)Polymere, da diese üblicherweise erst bei hohen Temperaturen ihren Glasübergang zeigen. Diese vernetzten Polymeren können entweder bereits im Verlauf der Polymerisation bzw. Polykondensation oder Copolymerisation bzw. Copolykondensation vernetzt worden sein, oder sie können nach Abschluß der eigentlichen (Co-)Polymerisation bzw. (Co-)Polykondensation in einem gesonderten Verfahrensschritt nachvernetzt worden sein.

Im Hinblick auf die Verarbeitbarkeit der Kern-Mantel-Partikel zu Formkörpern ist es von Vorteil, wenn das Gewichtsverhältnis von Kern zu Mantel im Bereich von 2:1 bis 1:5, vorzugsweise im Bereich von 3:2 bis 1:3 und insbesondere bevorzugt im Bereich von kleiner als 1,2:1 liegt. In speziellen Ausführungsformen der vorliegenden Erfindung ist es sogar bevorzugt, wenn das Gewichtsverhältnis von Kern zu Mantel kleiner als 1:1 ist, wobei eine typische Obergrenze des Mantelanteiles bei einem Gewichtsverhältnis von Kern zu Mantel von 2:3 liegt.

Die erfindungsgemäßen Kern-Mantel-Partikel lassen sich nach verschiedenen Verfahren herstellen. Eine bevorzugte Möglichkeit, die Partikel zu erhalten, ist ein weiterer Gegenstand der vorliegenden Erfindung. Es handelt sich dabei um ein Verfahren zur Herstellung Dispersionen von Kern-Mantel-Partikeln, durch a) Oberflächenbehandlung monodisperser Kerne, und b) Aufbringen des Mantels aus organischen Polymeren auf die behandelten Kerne.

In einer Verfahrensvariante werden die monodispersen Kerne in einem Schritt a) durch Emulsionspolymerisation erhalten.

In einer bevorzugten Erfindungsvariante wird auf die Kerne in Schritt b) eine vernetzte polymere Zwischenschicht, vorzugsweise durch Emulsionspolymerisation oder durch ATR-Polymerisation, aufgebracht, die vorzugsweise reaktive Zentren aufweist, an die der Mantel kovalent angebunden werden kann. ATR-Polymerisation steht hier für Atomic Transfer Radicalic Polymerisation, wie sie beispielsweise in K. Matyjaszewski, Practical Atom Transfer Radical Polymerization, Polym. Mater. Sci. Eng. 2001, 84 beschrieben wird. Die Einkapselung anorganischer Materalien mittel ATRP wird beispielsweise in T. Werne, T. E. Patten, Atom Transfer Radical Polymerization from Nanoparticles: A Tool for the Preparation of Well-Defined Hybrid Nanostructures and for Understanding the Chemistry of Controlled/"Living" Radical Polymerization from Surfaces, J. Am. Chem. Soc. 2001, 123, 7497-7505 und WO 00/11043 beschrieben. Die Durchführung sowohl dieser Methode als auch die Durchführung von Emulsionspolymerisationen sind dem Fachmann für Polymerherstellung geläufig und beispielsweise in den o.g. Literaturstellen beschrieben.

Dementsprechend ist ein Verfahren zur Herstellung von Dispersionen bei dem die monodispersen Kerne in einem Schritt a1) durch Emulsionspolymerisation erhalten werden und in einem Schritt a2) eine vernetzte polymere Zwischenschicht, vorzugsweise durch Emulsionspolymerisation oder durch ATR-Polymerisation, auf die Kerne aufgebracht wird, die vorzugsweise reaktive Zentren aufweist, an die der Mantel kovalent angebunden werden kann, eine bevorzugte Variante des erfindungsgemäßen Verfahrens.

Das flüssige Reaktionsmedium, in dem die Polymerisationen oder Copolymerisationen ausgeführt werden können, besteht aus den bei Polymerisationen, insbesondere bei Verfahren der Emulsionspolymerisation, üblicherweise eingesetzten Lösungs-, Dispergier- oder Verdünnungsmitteln. Hierbei wird die Auswahl so getroffen, dass die zur Homogenisierung der Kempartikel und Mantel-Vorprodukte eingesetzten Emulgatoren eine ausreichende Wirksamkeit entfalten können. Günstig als flüssiges Reaktionsmedium zur Durchführung des erfindungsgemäßen Verfahrens sind wässrige Medien, insbesondere Wasser.

Zur Auslösung der Polymerisation eignen sich beispielsweise Polymerisationsinitiatoren, die entweder thermisch oder photochemisch zerfallen, Radikale bilden, und so die Polymerisation auslösen. Dabei sind unter den thermisch aktivierbaren Polymerisationsinitiatoren solche bevorzugt, die zwischen 20 und 180 °C, insbesondere zwischen 20 und 80 °C zerfallen. Besonders bevorzugte Polymerisationsinitiatoren sind Peroxide, wie Dibenzoylperoxid Di-tert.-Butylperoxid, Perester, Percarbonate, Perketale, Hydroperoxide, aber auch anorganische Peroxide, wie H₂O₂, Salze der Peroxoschwefelsäure und Peroxodischwefelsäure, Azoverbindungen, Boralkylverbindungen sowie homolytisch zerfallende Kohlenwasserstoffe. Die Initiatoren und/oder Photoinitiatoren, die je nach den Anforderungen an das polymerisierte Material in Mengen zwischen 0,01 und 15 Gew.-%, bezogen auf die polymerisierbaren Komponenten eingesetzt werden, können einzeln oder, zur Ausnutzung vorteilhafter synergistischer Effekte, in Kombination miteinander angewendet werden. Daneben kommen Redoxsysteme zur Anwendung, wie z.B. Salze der Peroxodischwefelsäure und Peroxoschwefelsäure in Kombination mit niedervalenten Schwefelverbindungen, im speziellen Ammoniumperoxodisulfat in Kombination mit Natriumdithionit.

Auch für die Herstellung von Polykondensationsprodukten sind entsprechende Verfahren beschrieben worden. So ist es möglich, die Ausgangsmaterialien für die Herstellung von Polykondensationsprodukten in inerten Flüssigkeiten zu dispergieren und, vorzugsweise unter Auskreisen niedermolekularer Reaktionsprodukte wie Wasser oder - z. B. bei Einsatz von Dicarbonsäure-di-niederalkylestern zur Herstellung von Polyestern oder Polyamiden - niederen Alkanolen, zu kondensieren.

Polyadditionsprodukte werden analog durch Umsetzung durch Verbindungen erhalten, die mindestens zwei, vorzugsweise drei reaktive Gruppen wie z. B. Epoxid-, Cyanat-, Isocyanat-, oder Isothiocyanatgruppen aufweisen, mit Verbindungen, die komplementäre reaktive Gruppen tragen. So reagieren Isocyanate beispielsweise mit Alkoholen zu Urethanen, mit Aminen zu Harnstoffderivaten, während Epoxide mit diesen Komplementären zu Hydroxyethern bzw. Hydroxyaminen reagieren. Wie die Polykondensationen können auch Polyadditionsreaktionen vorteilhaft in einem inerten Lösungs- oder Dispergiermittel ausgeführt werden.

Es ist auch möglich, aromatische, aliphatische oder gemischte aromatischaliphatische Polymere, z. B. Polyester, Polyurethane, Polyamide, Polyharnstoffe, Polyepoxide oder auch Lösungspolymerisate, in einem Dispergiermittel, wie z. B. in Wasser, Alkoholen, Tetrahydrofuran, Kohlenwasserstoffen zu dispergieren oder zu emulgieren (Sekundärdispersion) und in dieser feinen Verteilung nachzukondensieren, zu vernetzen und auszuhärten.

Zur Herstellung der für diese Polymerisations-Polykondensations- oder Polyadditionsverfahren benötigten stabilen Dispersionen werden in der Regel neben den Lösungs- oder Dispergiermitteln Dispergierhilfsmittel eingesetzt.

Als Dispergierhilfsmittel werden vorzugsweise wasserlösliche hochmolekulare organische Verbindungen mit polaren Gruppen, wie Polyvinylpyrrolidon, Copolymerisate aus Vinylpropionat oder -acetat und Vinypyrrolidon, teilverseifte Copolymeriste aus einem Acrylester und Acrylnitril, Polyvinylalkohole mit unterschiedlichem Restacetat-Gehalt, Zelluloseether, Gelatine, Blockcopolymere, modifizierte Stärke, niedermolekulare, carbon- und/oder sulfonsäuregruppenhaltigen Polymerisate oder Mischungen dieser Stoffe verwendet, wobei der Anteil des Dispergierhilfsmittels an der Dispersion vorzugsweise im Bereich von 0,01 bis 10 Gew.-%, insbesondere bevorzugt im Bereich von 0,5 bis 5 Gew.-% liegt.

Besonders bevorzugte Schutzkolloide sind Polyvinylalkohole mit einem Restacetat-Gehalt von unter 35, insbesondere 5 bis 39 Mol.-% und/oder Vinylpyrrolidon-/Vinylpropionat-Copolymere mit einem Vinylestergehalt von unter 35, insbesondere 5 bis 30 Gew.-%.

Es können nichtionische oder auch ionische Emulgatoren, gegebenenfalls auch als Mischung, verwendet werden. Bevorzugte Emulgatoren sind ethoxylierte oder propoxylierte, längerkettige Alkanole oder Alkylphenole mit unterschiedlichen Ethoxylierungs- bzw. Propoxylierungsgraden (z. B. Addukte mit 0 bis 50 mol Alkylenoxid) bzw. deren neutralisierte, sulfatierte, sulfonierte oder phosphatierte Derivate, insbesondere neutralisierte Dialkylsulfobernsteinsäureester oder Alkyldiphenyloxid-disulfonate eingesetzt werden, wobei der Einsatz nichtionischer Emulgatoren und insbesondere der Einsatz ethoxylierter Alkylphenole bevorzugt ist. Als Beispiele hierfür können die unter dem Handelsnamen Triton^{™} (Fa. Dow Chemicals) erhältlichen Octylphenol Ethoxylate genannt werden.

Besonders vorteilhaft sind Kombinationen dieser Emulgatoren mit den oben genannten Schutzkolloiden, da mit ihnen besonders feinteilige Dispersionen erhalten werden. Daher sind Dispersionen, die mindestens einen nichtionischen oder ionischen Emulgator und mindestens ein Schutzkolloid enthalten erfindungsgemäß besonders bevorzugt.

Auch spezielle Verfahren zur Herstellung monodisperser Polymerteilchen sind in der Literatur (z. B. R.C. Backus, R.C. Williams, J. Appl, Physics 19, S. 1186, (1948) bereits beschrieben worden und können mit Vorteil insbesondere zur Herstellung der Kerne eingesetzt werden. Hierbei ist lediglich darauf zu achten, dass die oben angegebenen Teilchengrößen eingehalten werden. Anzustreben ist weiter eine möglichst hohe Einheitlichkeit der Polymerisate. Insbesondere die Teilchengröße kann dabei über die Auswahl geeigneter Emulgatoren und/oder Schutzkolloide bzw. entsprechender Mengen dieser Verbindungen eingestellt werden.

Durch die Einstellung der Reaktionsbedingungen, wie Temperatur, Druck, Reaktionsdauer und Einsatz geeigneter Katalysatorsysteme, die in bekannter Weise den Polymerisationsgrad beeinflussen, und die Auswahl der zu ihrer Herstellung eingesetzten Monomeren - nach Art und Mengenanteil - lassen sich gezielt die gewünschten Eigenschaftskombinationen der benötigten Polymeren einstellen. Dabei kann die Teilchengröße beispielsweise über die Auswahl und Menge der Initiatoren und andere Parameter, wie die Reaktionstemperatur, eingestellt werden. Die entsprechende Einstellung dieser Parameter bereitet dem Fachmann auf dem Gebiet der Polymerisation keinerlei Schwierigkeiten.

Insbesondere beim Einsatz anorganischer Kerne kann es auch bevorzugt sein, dass der Kern vor der Aufpolymerisation des Mantels einer Vorbehandlung unterzogen wird, die ein Anbinden des Mantels ermöglicht. Dies kann üblicherweise in einer chemischen Funktionalisierung der Partikeloberfläche bestehen, wie sie für die verschiedensten anorganischen Materialen aus der Literatur bekannt ist. Insbesondere bevorzugt kann es dabei sein, auf der Oberfläche solche chemischen Funktionen zu anzubringen, die als reaktives Kettenende eine Aufpfropfung der Mantelpolymere ermöglichen. Hier sind als Beispiele insbesondere endständige Doppelbindungen, Epoxy-Funktionen, sowie polykondensierbare Gruppen zu nennen. Die Funktionalisierung von Hydroxygruppentragenden Oberflächen mit Polymeren ist beispielsweise aus EP-A-337 144 bekannt. Weitere Methoden zur Modifizierung von Partikeloberflächen sind dem Fachmann wohl bekannt und beispielsweise in verschiedenen Lehrbüchern, wie Unger, K.K., Porous Silica, Elsevier Scientific Publishing Company (1979) beschrieben.

Ein weiterer Gegenstand der vorliegenden Erfindung ist ein Verfahren zur Herstellung von Granulaten enthaltend Kern-Mantel-Partikel bei dem eine Dispersion getrocknet und compoundiert wird.

Die Trocknung kann dabei mittels üblicher Methoden, wie beispielsweise Sprühtrocknung, Wirbelbetttrocknung oder Gefriertrocknung erfolgen.

Dabei können die erfindungsgemäßen Granulate, wenn es technisch vorteilhaft ist, Hilfs- und Zusatzstoffe enthalten. Sie können der optimalen Einstellung der für die Anwendung und Verarbeitung gewünschten bzw. erforderlichen anwendungstechnischen Daten, bzw. Eigenschaften dienen. Beispiele für derartige Hilfs- und/oder Zusatzstoffe sind Antioxidantien, UV-Stabilisatoren, Biozide, Weichmacher, Filmbildungshilfsmittel, Verlaufmittel, Füllmittel, Schmelzhilfsmittel, Haftmittel, Trennmittel, Auftragshilfsmittel, Entformungshilfsmittel, Mittel zur Viskositätsmodifizierung, z. B. Verdicker.

Besonders empfehlenswert sind Zusätze von Filmbildungshilfsmitteln und Filmmodifizierungsmitteln auf der Basis von Verbindungen der allgemeinen Formel HO-CₙH₂ₙ-O-(CₙH₂ₙ-O)ₘH, worin n eine Zahl von 2 bis 4, vorzugsweise 2 oder 3, und m eine Zahl von 0 bis 500 ist. Die Zahl n kann innerhalb der Kette variieren und die verschiedenen Kettenglieder können in statistischer oder in blockweiser Verteilung eingebaut sein. Beispiele für derartige Hilfsmittel sind Ethylenglycol, Propylenglycol, Di-, Tri- und Tetraethylenglycol, Di-, Tri- und Tetrapropylenglycol, Polyethylenoxide, Polypropylenoxid und Ethylenoxid/Propylenoxid-Mischpolymere mit Molgewichten bis ca. 15000 und statistischer oder blockartigen Verteilung der Ethylenoxid und Propylenoxid-Baugruppen.

Gegebenenfalls sind auch organische oder anorganische Lösungs-, Dispergier- oder Verdünnungsmittel, die beispielsweise die offene Zeit der Formulierung, d. h. die für ihren Auftrag auf Substrate zur Verfügung stehende Zeit, verlängern, Wachse oder Schmelzkleber als Additive möglich.

Gewünschtenfalls können den Granulaten auch Stabilisatoren gegen UV-Strahlung und Wettereinflüsse zugesetzt werden. Hierzu eignen sich z. B. Derivate des 2,4-Dihydroxybenzophenons, Derivate des 2-Cyan-3,3'-dephenylacrylats, Derivate des 2,2',4,4'-Tetrahydroxybenzophenons, Derivate des o-Hydroxyphenyl-benztriazols, Salicylsäureester, o-Hydroxyphenyl-s-triazine oder sterisch gehinderte Amine. Auch diese Stoffe können einzeln oder als Gemische eingesetzt werden.

Die Gesamtmenge der Hilfs- und/oder Zusatzstoffe beträgt bis zu 40 Gew.-%, vorzugsweise bis zu 20 Gew.-%, insbesondere bevorzugt bis zu 5 Gew.-% des Gewichts der Granulate. Dementsprechend bestehen die Granulate zu mindestens 60 Gew.-%, vorzugsweise zu mindestens 80 Gew.-% und insbesondere bevorzugt zu mindestens 95 Gew.-% aus Kern-Mantel-Partikeln besteht.

Formkörper mit optischem Effekt erhältlich aus den oben beschriebenen Kern-Mantel-Partikeln bzw. Granulaten sowie die Verwendung solcher Kern-Mantel-Partikel bzw. Granulate zur Herstellung von Formkörpern sind weitere Gegenstände der vorliegenden Erfindung.

Unter einem optischen Effekt werden dabei erfindungsgemäß sowohl Effekte im sichtbaren Wellenlängenbereich des Lichtes als auch beispielsweise Effekte im UV- oder Infrarot-Bereich verstanden. In letzter Zeit hat es sich eingebürgert, derartige Effekte allgemein als photonische Effekte zu bezeichnen. Alle diese Effekte sind optische Effekte im Sinne der vorliegenden Erfindung, wobei es sich in einer bevorzugten Ausführungsform bei dem Effekt um eine Opaleszenz im sichtbaren Bereich handelt. Im Sinne einer üblichen Definition des Begriffes handelt es sich bei den aus den erfindungsgemäßen Kern-Mantel-Partikeln erhältlichen Formkörpern um photonische Kristalle (vgl. Nachrichten aus der Chemie; 49(9) September 2001; S. 1018 - 1025).

In einer bevorzugten Variante der Herstellung erfindungsgemäßer Formkörper liegt die Temperatur in Schritt a) mindestens 40°C, vorzugsweise mindestens 60°C oberhalb des Glaspunktes des Mantels der Kern-Mantel-Partikel. Es hat sich empirisch gezeigt, dass die Fließfähigkeit des Mantels in diesem Temperaturbereich den Anforderungen für eine wirtschaftliche Herstellung der Formkörper in besonderem Maße entspricht.

In einer ebenfalls bevorzugten Verfahrensvariante, die zu erfindungsgemäßen Formkörpern führt, werden die fließfähigen Kern-Mantel-Partikel unter Einwirkung der mechanischen Kraft aus b) auf eine Temperatur abgefühlt , bei welcher der Mantel nicht mehr fließfähig ist.

Bei der mechanischen Krafteinwirkung kann es sich erfindungsgemäß um eine solche Krafteinwirkung handeln, die bei üblichen Verarbeitungsschritten von Polymeren erfolgt. In bevorzugten Varianten der vorliegenden Erfindung erfolgt die mechanische Krafteinwirkung entweder:
- durch uniaxiales Pressen oder
- Krafteinwirkung während eines Spritzgußvorganges oder
- während eines Transferpressvorganges,
- während einer (Co-) Extrusion oder
- während eines Kalandriervorganges oder
- während eines Blasvorganges.

Erfolgt die Krafteinwirkung durch uniaxiales Pressen, so handelt es sich bei den erfindungsgemäßen Formkörpern vorzugsweise um Filme. Erfindungsgemäße Filme können dabei vorzugsweise auch durch Kalandrieren, Folienblasen oder Flachfolienextrusion hergestellt werden. Die verschiedenen Möglichkeiten der Verarbeitung von Polymeren unter Einwirkung mechanischer Kräfte sind dem Fachmann wohl bekannt und können beispielsweise dem Standardlehrbuch Adolf Franck, "Kunststoff-Kompendium"; Vogel-Verlag; 1996 entnommen werden.

Werden Formkörper durch Spritzguß hergestellt, so ist es insbesondere bevorzugt, wenn die Entformung erst nach Abkühlung der Form mit dem darin enthaltenen Formteil erfolgt. In der technischen Durchführung ist es dabei vorteilhaft, wenn Formen mit großem Kühlkanalquerschnitt eingesetzt werden, da die Abkühlung dann in kürzerer Zeit erfolgen kann. Es hat sich gezeigt, dass durch die Abkühlung in der Form die erfindungsgemäßen Farbeffekte deutlich intensiver werden. Es wird vermutet, dass es bei diesem gleichmäßigen Abkühlvorgang zu einer besseren Ausordnung der Kern-Mantel-Partikel zu dem Gitter kommt. Dabei ist es insbesondere vorteilhaft, wenn die Form vor dem Einspritzvorgang aufgeheizt wurde.

Zur Erzielung des erfindungsgemäßen optischen oder photonischen Effektes ist es wünschenswert, dass die Kern-Mantel-Partikel einen mittleren Teilchendurchmesser im Bereich von etwa 5 nm bis etwa 2000 nm aufweisen. Dabei kann es insbesondere bevorzugt sein, wenn die Kern-Mantel-Partikel einen mittleren Teilchendurchmesser im Bereich von etwa 5 bis 20 nm, vorzugsweise 5 bis 10 nm, aufweisen. In diesem Fall können die Kerne als "Quantum dots" bezeichnet werden; sie zeigen die entsprechenden aus der Literatur bekannten Effekte. Zur Erzielung von Farbeffekten im Bereich des sichtbaren Lichtes ist es von besonderem Vorteil, wenn die Kern-Mantel-Partikel einen mittleren Teilchendurchmesser im Bereich von etwa 50 - 500 nm aufweisen. Insbesondere bevorzugt werden Partikel im Bereich von 100 - 500 nm eingesetzt, da bei Teilchen in diesem Größenordnungsbereich (in Abhängigkeit des in der photonischen Struktur erzielbaren Brechungsindexkontrastes) die Reflektionen verschiedener Wellenlängen des sichtbaren Lichtes sich deutlich voneinander unterscheiden und so die für optische Effekte im sichtbaren Bereich besonders wichtige Opaleszenz besonders ausgeprägt in verschiedensten Farben auftritt. In einer Variante der vorliegenden Erfindung ist es jedoch auch bevorzugt, vielfache dieser bevorzugten Teilchengröße einzusetzen, die dann zu Reflexen entsprechend der höheren Ordnungen und damit zu einem breiten Farbenspiel führen.

Entscheidend für die Intensität der beobachteten Effekte ist auch die Differenz der Brechungsindices von Kern und Mantel. Erfindungsgemäße Formkörper weisen vorzugsweise eine Differenz zwischen den Brechungsindices des Kernmaterials und des Mantelmaterials von mindestens 0,001, vorzugsweise mindestens 0,01 und insbesondere bevorzugt mindestens 0,1 auf.

In einer besonderen Ausführungsform der Erfindung sind in die Matrixphase der Formkörper neben den Kernen der Kern-Mantel-Partikel weitere Nanopartikel eingelagert. Diese Partikel werden hinsichtlich ihrer Partikelgröße so ausgewählt, dass sie in die Hohlräume der Kugelpackung aus den Kernen passen und so die Anordnung der Kerne nur wenig verändern. Durch gezielte Auswahl entsprechender Materialien und/oder der Teilchengröße ist es zum einen möglich die optischen Effekte der Formkörper zu verändern, beispielsweise deren Intensität zu erhöhen. Zum andern kann durch Einlagerung geeigneter "Quantum dots" die Matrix entsprechend funktionalisiert werden. Bevorzugte Materialien sind anorganische Nanopartikel, insbesondere Nanopartikel von Metallen oder von II-VI- bzw. III-V-Halbleitern oder von Materialen, welche die magnetischen/elektrischen (elektronischen) Eigenschaften der Materialien beeinflussen. Beispiele für bevorzugte Nanopartikel sind Edelmetalle, wie Silber, Gold und Platin, Halbleiter oder Isolatoren, wie Zink- und Cadmiumchalkogenide, Oxide, wie Hämatit, Magnetit oder Perowskite, oder Metallpnictide, z. B. Galliumnitrid oder Mischphasen dieser Materialien.

Der genaue Mechanismus, der zu der gleichmäßigen Orientierung der Kern-Mantel-Partikel in den erfindungsgemäßen Formkörpern führt, ist bislang unbekannt. Es hat sich jedoch gezeigt, dass die Krafteinwirkung essentiell zur Ausbildung der weitreichenden Ordnung ist. Es wird vermutet, dass die Elastizität des Mantelmaterials unter den Verarbeitungsbedingungen entscheidend für den Ordnungsprozess ist. Die Kettenenden der Mantelpolymere haben im allgemeinen das Bestreben, eine Knäuelform anzunehmen. Kommen sich zwei Partikel zu nahe, so werden die Knäuel nach der Modellvorstellung gestaucht und es entstehen abstoßende Kräfte. Da die Mantel-Polymerketten verschiedener Partikel auch miteinander in Wechselwirkung treten, werden die Polymerketten nach dem Modell gestreckt, wenn sich zwei Partikel voneinander entfernen. Durch das Bestreben der Mantel-Polymerketten wieder eine Knäuelform anzunehmen, entsteht eine Kraft, welche die Partikel wieder näher zusammen zieht. Nach der Modellvorstellung wird die weitreichende Ordnung der Partikel im Formkörper durch das Wechselspiel dieser Kräfte erzeugt.

Gegenstand der Erfindung ist weiterhin die Verwendung von erfindungsgemäßen Formkörpern oder von erfindungsgemäßen Kern-Mantel-Partikeln zur Herstellung von Pigmenten. Dabei eignen sich die so erhältlichen Pigmente insbesondere zum Einsatz in Farben, Lacken, Druckfarben, Kunststoffen, keramischen Materialien, Gläsern und kosmetischen Formulierungen. Hierfür können sie auch mit handelsüblichen Pigmenten, beispielsweise anorganischen und organischen Absorptionspigmenten, Metalleffektpigmenten und LC-Pigmenten, gemischt eingesetzt werden. Weiterhin sind die erfindungsgemäßen Partikel auch zur Herstellung von Pigmentpräparationen, sowie zur Herstellung von Trockenpräparaten, wie z.B. Granulaten geeignet. Derartige Pigmentpartikel besitzen vorzugsweise eine plättchenförmige Struktur mit einer durchschnittlichen Teilchengröße von 5 µm - 5 mm.

Dabei kann die Herstellung der Pigmente beispielsweise erfolgen, indem aus den Kern-Mantel-Partikeln zuerst ein Film hergestellt wird, der ggf. gehärtet werden kann. Anschließend kann der Film in geeigneter Weise durch Schneiden oder Brechen und evtl. anschließendes Mahlen zu Pigmenten geeigneter Größe zerkleinert werden. Dieser Vorgang kann beispielsweise in einem kontinuierlichen Bandverfahren erfolgen.

Das erfindungsgemäße Pigment kann dann zur Pigmentierung von Lacken, Pulverlacken, Farben, Druckfarben, Kunststoffen und kosmetischen Formulierungen, wie z.B. von Lippenstiften, Nagellacken, kosmetischen Stiften, Preßpuder, Make-ups, Shampoos, sowie losen Pudern und Gelen verwendet werden.

Die Konzentration des Pigmentes im zu pigmentierenden Anwendungssystem liegt in der Regel zwischen 0,1 und 70 Gew.-%, vorzugsweise zwischen 0,1 und 50 Gew.-% und insbesondere zwischen 1,0 und 20 Gew.-%, bezogen auf den Gesamtfestkörpergehalt des Systems. Sie ist in der Regel abhängig vom konkreten Anwendungsfall. Kunststoffe enthalten das erfindungsgemäße Pigment üblicherweise in Mengen von 0,01 bis 50 Gew.%, vorzugsweise von 0,01 bis 25 Gew.-%, insbesondere von 0,1 bis 7 Gew.-%, bezogen auf die Kunststoffmasse. Im Lackbereich wird das Pigmentgemisch, in Mengen von 0,1 bis 30 Gew.-%, vorzugsweise 1 bis 10 Gew.-%, bezogen auf die Lackdispersion, eingesetzt. Bei der Pigmentierung von Bindemittelsystemen z.B. für Farben und Druckfarben für den Tiefdruck, Offsetdruck oder Siebdruck, oder als Vorprodukt für Druckfarben, z.B. in Form von hochpigmentierten Pasten, Granulaten, Pellets, etc., haben sich insbesondere Pigmentgemische mit sphärischen Farbmitteln, wie z.B. TiO₂, Ruß, Chromoxid, Eisenoxid, sowie organische "Farbpigmente", als besonders geeignet erwiesen. Das Pigment wird in der Regel in die Druckfarbe in Mengen von 2-35 Gew.-%, vorzugsweise 5-25 Gew.-%, und insbesondere 8-20 Gew.-% eingearbeitet. Offsetdruckfarben können das Pigment bis zu 40 Gew.-% und mehr enthalten. Die Vorprodukte für die Druckfarben, z.B. in Granulatform, als Pellets, Briketts, etc., enthalten neben dem Bindemittel und Additiven bis zu 95 Gew.-% des erfindungsgemäßen Pigmentes. Gegenstand der Erfindung sind somit auch Formulierungen, die das erfindungsgemäße Pigment enthalten.

Die nachfolgenden Beispiele sollen die Erfindung näher erläutern, ohne sie zu begrenzen.

### Beispiele

### Beispiel 1: Herstellung von Dispersionen von Kern-Mantel-Partikeln

| Einwaage [g] | | Bemerkungen |
|---|---|---|
| | **Vorlage** | |
| 11,1 | 1,4 Butandioldiacrylat (BDDA) | |
| 99,4 | Styrol | |
| 1,38 | Natriumdisulfit | In 40 mL VE-H₂O |
| 4,2 | Dodecylsulfat Natriumsalz (NaDS) | Texapon^{™} K12, Zugabe als 15%ige Lösung / 27,95g |
| 6060 | VE-Wasser | |
| | | |

| | **Starter 1** | |
|---|---|---|
| 10,36 | Natriumperoxodisulfat 100%ig | als 20,8%ige Lsg. / 49,8 mL |
| 1,41 | Natriumdisulfit 100%ig | als 3,4%ige Lsg. / 41,5 mL |
| | | 15min rühren |
| | | |

| | **Lösung 1** | |
|---|---|---|
| 221,7 | 1,4 Butandioldiacrylat (BDDA) | Zugabe Lösung 1 in 95 min |
| 2011,3 | Styrol | |
| 4,25 | Kaliumhydroxid | |
| 10,3 | Dodecylsulfat Natriumsalz (NaDS) | Texapon^{™} K12, Zugabe als 15%ige Lösung / 68,75g |
| 2945 | VE-Wasser | Nachrührzeit 10min |
| | | |

| | **Starter 2** | |
|---|---|---|
| 2,66 | Natriumperoxodisulfat | als 6,3%ige Lsg. / 42,2 mL |
| | | Nachrührzeit 10min |
| | | |

| | **Lösung 2** | |
|---|---|---|
| 41,4 | Allylmethacrylat (AMA) | Zugabe Lösung 2 in 20min |
| 372,8 | Methylmethacrylat (MMA) | |
| 2,1 | Dodecylsulfat Natriumsalz (NaDS) | Texapon^{™} K12, Zugabe als 15%ige Lösung / 13,78 g) |
| 538 | VE-Wasser | Nachrührzeit 20min |
| | | |

| | **Lösung 3** | |
|---|---|---|
| 374,8 | Methylmethacrylat (MMA) | Zugabe Lösung 3 innerhalb 133 min |
| 1761,79 | Butylacrylat (n-BA) | |
| 1611,8 | Butylmethacrylat (n-BMA) | |
| 10,3 | Dodecylsulfat Natriumsalz (NaDS) | Texapon^{™} K12, Zugabe als 15%ige Lösung / 68,4 g |
| 9,3 | Triton^{™} X405 (70%ig) | Zugabe als 15%ige Lösung / 43,4 g |
| 3633 | VE-Wasser | Nachrührzeit 30min. |
| | | |

| | **Nachstabilisierung** | |
|---|---|---|
| 279 g | Triton^{™} X405 (70%ig) | entspr. 195 g reinem Triton^{™} X405 |

Bei Triton^{™} X405 handelt es sich um ein Octylphenolethoxylat mit einer durchschnittlichen Anzahl von 35 Ethylenoxid-Wiederholungseinheiten (Handelsprodukt der Fa. The Dow Chemical Company).

### Durchführungsbeschreibung:

Ein Wasserbad, welches mit einem Doppelmantelreaktor verbunden ist wir auf 75°C aufgeheizt.
Im 20 L-Doppelmantelreaktor mit Impellerrührer werden 6060 g VE-Wasser (vollentsalzt) und 27,95 g Texapon^{™} K12 (15%ig) vorgelegt und mit Stickstoff gespült. Zusätzlich werden in die Vorlage 11,1 g BDDA und 99,4 g Styrol gegeben.

Nun wird der Reaktor unter rühren aufgeheizt. Bei ca. 32° C werden 1,38 g NaHS in 40mL VE-Wasser gelöst und zu Vorlage gegeben. Dabei wird noch mit Stickstoff gespült.
Bei 55°C - 58°C werden 49,8 mL NaPS (20,8%ig) und 41,5 mL NaHS (3,4%ig), in den Reaktor eingespritzt und die Reaktion gestartet.
Nach 15 Minuten wird eine Monomeremulsion bestehend aus 221,7 g BDDA, 2011,3 g Styrol, 68,75 g Texapon^{™} K12 (15%ig), 4,25 g Kaliumhydroxid und 2945 mL VE-Wasser (mit N₂ gespült) kontinuierlich über eine Membranpumpe innerhalb von 95 Minuten zudosiert.
Nach Beendigung der Dosierung werden weitere 10 Minuten nachgerührt.

Nun werden 42,2 mL NaPS (6,3%ig) zugegeben. Nach 10 Minuten wir die zweite Monomermischung, bestehend aus 372,8 g MMA, 41,4 g AMA, 13,78 g Texapon^{™} K12 (15%ig) und 538 g VE-Wasser, kontinuierlich, über eine Membranpumpe, innerhalb von 20 Minuten zudosiert. Nach der Dosierung werden hier 20 Minuten nachgerührt.

Nach Ablauf der Nachrührzeit, wird die dritte Monomermischung, über eine Membranpumpe, kontinuierlich innerhalb von 135 Minuten zudosiert. Die dritte Monomermischung besteht aus 1761,79 g n-Ba, 374,8 g MMA, 1611,8 g n-BMA, 68,4 g Texapon^{™} K12 (15%ig), 43,4 g Triton^{™} X405 (15%ig) und 3633 g VE-Wasser.

Die Verfahrenstemperatur während der Zugabe aller drei Monomermischungen beträgt 75 °C.

Nach Beendigung der Dosierung werden 30 Minuten nachgerührt und langsam auf RT abgekühlt. Während des Abkühlens wird die Dispersion langsam mit 5% Triton^{™} X405 (Bezogen auf den Feststoffgehalt, d.h. 195 g Triton^{™} X405 d.h. 279 g 70% Triton^{™} X405-Lösung) nachstabilisiert.

Bei < 40°C wird die Dispersion über eine Nylon-Gaze abfiltriert.

Die resultierenden Partikel besitzen eine Mantelpolymerzusammensetzung von 10 Gew.-% MMA, 47 Gew.-% n-BA, 43 Gew.-% n-BMA. Analog können durch Variation der Monomeranteile Kern-Mantel-Partikel mit variierten Gewichtsverhältnissen der Mantelpolymerbestandteile zueinander erhalten werden.

### Beispiel 2: Herstellung von Granulaten der Kern-Mantel-Partikel

3 kg der Kern-Mantel-Partikel aus Beispiel 1 werden in einer Schneidmühle (Fa. Rapid, Typ:1528) unter Eiskühlung zerkleinert und anschließend in einem Einschneckenextruder (Plasti-Corder; Fa. Brabender; Schneckendurchmesser 19 mm mit 1-Loch-Düse (3mm)) compoundiert. Nach einer Kühlstrecke wird in einem Granulator A 90-5 (Fa. Automatik) granuliert.

### Beispiel 3a: Herstellung eines Filmes aus Kern-Mantel-Partikeln

2 g der Granulate aus Beispiel 2 werden in einer Presse Collin 300P drucklos auf eine Temperatur von 120°C aufgeheizt und bei einem Druck von 30 bar zu einem Film verpresst. Nach dem Abkühlen auf Raumtemperatur wird der Druck wieder abgesenkt.

### Beispiel 3b: Herstellung eines Filmes aus Kern-Mantel-Partikeln

25 g der Granulate aus Beispiel 2 werden in einer Presse mit Kassettenkühlsystem (Fa. Dr. Collin GmbH; Typ: 300E) drucklos auf eine Temperatur von 150°C aufgeheizt und bei einem Druck von 250 bar zu einem Film verpresst. Nach dem Abkühlen auf Raumtemperatur wird der Druck nach 8 Minuten wieder abgesenkt.

### Beispiel 4: Herstellung von Formkörpern im Spritzgußverfahren

Den Granulaten aus Beispiel 2 werden 0,2 Gew.-% Trennmittel (Ceridust^{®} 3615; Fa. Clariant) zugemischt. Die Mischung wird mit einer Spritzgußanlage Klöckner Ferromatik 75 FX 75-2F weiter verarbeitet. Dabei wird das Granulat bei einer Zylindertemperatur von 190°C bei 900 bar in die auf 80°C temperierte Form eingespritzt, anschließend in der Form abgekühlt und bei einer Formtemperatur von 30°C entformt. Es resultieren Formkörper mit vom Betrachtungswinkel abhängenden optischem Effekt.

### Beispiel 5: Herstellung einer Flachfolie (Band)

Granulate aus Beispiel 2 werden auf einer Flachfolienanlage bestehend aus einem Einschneckenextruder (Fa. Göttfert; Typ: Extrusiometer; Schneckendurchmesser 20 mm; L/D 25), einem dickenverstellbaren Folienwerkzeug (Breite 135 mm) und einem temperierbaren Glättwerk (Fa. Leistritz; Walzendurchmesser 15 mm; Walzenbreite 350 mm) verarbeitet. Es wird ein Folienband von 125 mm Breite und 1 mm Dicke erhalten.

### Vergleichsbeispiel A: Herstellung von Kern-Mantel-Partikeln mit Butylacrylat-Mantel

In einem auf 75°C vorgeheizten Rührkesselreaktor mit Propellerrührer, Argon-Schutzgaseinleitung und Rückflußkühler wird eine auf 4°C temperierte Vorlage, bestehend aus 217 g Wasser, 0,4 g Butandioldiacrylat (Fa. Merck, entstabilisiert), 3,6 g Styrol (Fa. BASF, enstabilisiert) und 80 mg Natriumdodecylsulfat (SDS; Fa. Merck) eingefüllt und unter starkem Rühren dispergiert. Direkt nach dem Einfüllen wird die Reaktion durch direkt aufeinanderfolgende Zugabe von 50 mg Natriumdithionit (Fa. Merck), 250 mg Ammoniumperoxodisulfat (Fa. Merck) und wiederum 50 mg Natriumdithionit (Fa. Merck), jeweils in 5g Wasser gelöst, gestartet. Nach 10 min wird eine Monomeremulsion aus 6,6 g Butandioldiacrylat (Fa. Merck, entstabilisiert), 59,4 g Styrol (Fa. BASF, enstabilisiert), 0,3 g SDS, 0,1 g KOH und 90 g Wasser über einen Zeitraum von 210 min kontinuierlich zudosiert. Der Reaktorinhalt wird 30 min ohne weitere Zugabe gerührt. Anschließend wird eine zweite Monomeremulsion aus 3 g Allylmethacrylat (Fa. Merck, entstabilisiert), 27 g Methylmethacrylat (Fa. BASF, enstabilisiert), 0,15 g SDS (Fa. Merck) und 40 g Wasser über einen Zeitraum von 90 min kontinuierlich zudosiert. Der Reaktorinhalt wird anschließend 30 min ohne weitere Zugabe gerührt. Es wird anschließend eine Monomeremulsion aus 130 g Butylacrylat (Fa. Merck, entstabilisiert), 139 g Wasser und 0,33 g SDS (Fa. Merck) über einen Zeitraum von 180 min kontinuierlich zudosiert. Zur nahezu vollständigen Abreaktion der Monomere wird anschließend noch 60 min gerührt. Die Kern-Mantel-Partikel werden anschließend in 1 L Methanol ausgefällt, mit 1 L dest. Wasser versetzt, abgenutscht, getrocknet und entsprechend Beispielen 2 bis 5 weiter verarbeitet.

### Vergleichsbeispiel B: Herstellung von Kern-Mantel-Partikeln mit Etylacrylat-Butylacrylat-Mantel

In einem auf 75°C vorgeheizten Rührkesselreaktor mit Propellerrührer, Argon-Schutzgaseinleitung und Rückflußkühler wird eine auf 4°C temperierte Vorlage, bestehend aus 217 g Wasser, 0,4 g Butandioldiacrylat (Fa. Merck, entstabilisiert), 3,6 g Styrol (Fa. BASF, enstabilisiert) und 60 mg Natriumdodecylsulfat (SDS; Fa. Merck) eingefüllt und unter starkem Rühren dispergiert. Direkt nach dem Einfüllen wird die Reaktion durch direkt aufeinanderfolgende Zugabe von 50 mg Natriumdithionit (Fa. Merck), 300 mg Ammoniumperoxodisulfat (Fa. Merck) und wiederum 50 mg Natriumdithionit (Fa. Merck), jeweils in 5g Wasser gelöst, gestartet. Nach 10 min wird eine Monomeremulsion aus 8,1 g Butandioldiacrylat (Fa. Merck, entstabilisiert), 72,9 g Styrol (Fa. BASF, enstabilisiert), 0,375 g SDS, 0,1 g KOH und 110 g Wasser über einen Zeitraum von 150 min kontinuierlich zudosiert. Der Reaktorinhalt wird 30 min ohne weitere Zugabe gerührt. Anschließend wird eine zweite Monomeremulsion aus 1,5 g Allylmethacrylat (Fa. Merck, entstabilisiert), 13,5 g Methylmethacrylat (Fa. BASF, enstabilisiert), 0,075 g SDS (Fa. Merck) und 20 g Wasser über einen Zeitraum von 45 min kontinuierlich zudosiert. Der Reaktorinhalt wird anschließend 30 min ohne weitere Zugabe gerührt. Anschließend werden 50 mg APS in 5g Wasser gelöst zugegeben. Es wird anschließend eine Monomeremulsion aus 59,4 g Ethylacrylat (Fa. MERCK, entstabilisiert), 59,4g Butylacrylat, 1,2g Acrylsäure, 120 g Wasser und 0,33 g SDS (Fa. Merck) über einen Zeitraum von 240 min kontinuierlich zudosiert. Zur nahezu vollständigen Abreaktion der Monomere wird anschließend noch 60 min gerührt. Die Kern-Mantel-Partikel werden anschließend in 1 L Methanol ausgefällt, mit 1 L dest. Wasser versetzt, abgenutscht und getrocknet und entsprechend Beispielen 2 bis 5 weiter verarbeitet..

### Beispiel 6: Zug- bzw. Dehnungsversuche

Bei dem Zugversuch werden genormte Prüfkörper zwischen zwei Klemmbacken eingespannt und verstreckt: Länge der Parallelstrecke der Probekörper ca. 20 mm; Länge der Meßstrecke: 25 mm; Dehnungsmesser: Traverse mit Einspannlänge 30 mm; Prüfgeschwindigkeit: 20 mm/min; Kraftmesskopf: 1000 N; die Vorkraft betrug 0,05 MPa. Die angreifende Kraft wird auf die kleinste Querschnittsfläche des Prüflings bezogen und als Zugspannung angegeben.

| **Mantelaufbau** | **Zug festigkeit /** Mpa | **E-Modul / Mpa** | **Streckdehnung /%** | **Streckspannung / Mpa** | **Bruchdehnung /%** |
|---|---|---|---|---|---|
| 53.5% n-BMA, 36.5% n-BA, 10% MMA | 4,00 | 24 | 57,6 | 3,77 | 174 |
| 43% n-BMA, 47% n-BA, 10% MMA | 2,00 | 12 | 38,0 | 2,00 | 449 |
| Vergleichsbeispiel 90% EA 10% MMA, | 0,70 | - 2 | 50,6 | 0,68 | 648 |

Es zeigt sich, dass die erfindungsgemäßen Partikel ein größeres E-Modul aufweisen und sich erst bei einer höheren Streckspannung verformen.

## Patentansprüche

1. Kern-Mantel-Partikel, deren Kern im wesentlichen fest ist und eine im wesentlichen monodisperse Größenverteilung aufweist, wobei ein Unterschied zwischen den Brechungsindices des Kernmaterials und des Mantelmaterials besteht und der Kern aus einem Material besteht, das entweder nicht oder bei einer Temperatur oberhalb der Fließtemperatur des Mantelmaterials fließfähig wird und der Mantel mit dem Kern über eine Zwischenschicht verbunden ist, **dadurch gekennzeichnet, dass** der Mantel aus einem Copolymeren besteht, welches mindestens ein C₄-C₈-Alkylacrylat und mindestens ein C₄-C₈-Alkyl- oder -Alkyl-aryl-methacrylat als Monomerbausteine enthält.

2. Kern-Mantel-Partikel nach Anspruch 1, **dadurch gekennzeichnet, dass** der Mantel
(a) 10 bis 70 Gew.-%, vorzugsweise 25 bis 60 Gew.-% und insbesondere bevorzugt 35 bis 55 Gew.-% C₄-C₈-Alkylacrylat,
(b) 10 bis 80 Gew.-%, vorzugsweise 25 bis 70 Gew.-% und insbesondere bevorzugt 35 bis 60 Gew.-% C₄-C₈-Alkyl- oder-Alkyl-aryl-methacrylat
(c) 0,5 bis 40 Gew.-%, vorzugsweise 1 bis 30 Gew.-% und insbesondere bevorzugt 5 bis 20 Gew.-% Methylmethacrylat
jeweils bezogen auf das Gewichtsverhältnis der Monomerbausteine als Monomerbausteine enthält.

3. Kern-Mantel-Partikel nach mindestens einem der Ansprüche 1 oder 2, **dadurch gekennzeichnet, dass** das mindestens eine C₄-C₈-Alkylacrylat ausgewählt ist aus der Gruppe n-Butylacrylat, iso-Butylacrylat, sec-Butylacrylat, n-Propylacrylat, n-Pentylacrylat, n-Hexylacrylat, n-Octylacrylat, wobei das mindestens eine C₄-C₈-Alkylacrylat vorzugsweise n-Butylacrylat ist.

4. Kern-Mantel-Partikel nach mindestens einem der vorstehenden Ansprüche, **dadurch gekennzeichnet, dass** das mindestens eine C₄-C₈-Alkyl- oder -Alkyl-aryl-methacrylat ausgewählt ist aus der Gruppe n-Butylmethacrylat, iso-Butylmethacrylat, sec-Butylmethacrylat, n-Propylmethacrylat, n-Pentylmethacrylat, n-Hexylmethacrylat, Cyclohexylmethacrylat, n-Octylmethacrylat, Benzylmethacrylat, wobei das mindestens eine C₄-C₈-Alkylacrylat vorzugsweise n-Butylmethacrylat ist.

5. Kern-Mantel-Partikel nach mindestens einem der vorstehenden Ansprüche, **dadurch gekennzeichnet, dass** der Mantel von einem statistischen Copolymer gebildet wird, welches vorzugsweise aus n-Butylacrylat, n-Butylmethacrylat und Methylmethacrylat aufgebaut ist.

6. Kern-Mantel-Partikel nach mindestens einem der vorstehenden Ansprüche, **dadurch gekennzeichnet, dass** der Mantel über eine zumindest teilweise vernetzte Zwischenschicht auf den Kern aufgepfropft ist.

7. Kern-Mantel-Partikel nach mindestens einem der vorstehenden Ansprüche, **dadurch gekennzeichnet, dass** der Kern aus einem organischen Polymer, das vorzugsweise vernetzt ist, besteht, wobei der Kern insbesondere bevorzugt aus vernetztem Polystyrol oder einem Copolymeren aus Methylmethacrylat und Styrol besteht.

8. Kern-Mantel-Partikel nach mindestens einem der Ansprüche 1 bis 6, **dadurch gekennzeichnet, dass** der Kern aus einem anorganischen Material, vorzugsweise einem Metall oder Halbmetall oder einem Metallchalcogenid oder Metallpnictid, insbesondere bevorzugt Siliciumdioxid besteht.

9. Kern-Mantel-Partikel nach mindestens einem der vorstehenden Ansprüche, **dadurch gekennzeichnet, dass** die Kern-Mantel-Partikel einen mittleren Teilchendurchmesser im Bereich von etwa 5 nm bis etwa 2000 nm, vorzugsweise im Bereich von etwa 5 bis 20 nm oder im Bereich von 100 - 500 nm aufweisen.

10. Kern-Mantel-Partikel nach mindestens einem der vorstehenden Ansprüche, **dadurch gekennzeichnet, dass** das Gewichtsverhältnis von Kern zu Mantel im Bereich von 2:1 bis 1:5, vorzugsweise im Bereich von 3:2 bis 1:3 und insbesondere bevorzugt im Bereich von kleiner als 1,2:1 liegt.

11. Kern-Mantel-Partikel nach mindestens einem der vorstehenden Ansprüche, **dadurch gekennzeichnet, dass** die Differenz zwischen den Brechungsindices des Kernmaterials und des Mantelmaterials mindestens 0,001, vorzugsweise mindestens 0,01 und insbesondere bevorzugt mindestens 0,1 beträgt.

12. Granulat, enthaltend Kern-Mantel-Partikel nach mindestens einem der Ansprüche 1 bis 11 und gegebenenfalls Hilfs- und Zusatzstoffe.

13. Granulat nach Anspruch 12, **dadurch gekennzeichnet, dass** als Hilfs- und Zusatzstoff mindestens eine Verbindung ausgewählt aus den Gruppen Antioxidantien, UV-Stabilisatoren, Biozide, Weichmacher, Filmbildungshilfsmittel, Verlaufmittel, Füllmittel, Schmelzhilfsmittel, Haftmittel, Trennmittel, Auftragshilfsmittel, Entformungshilfsmittel, Mittel zur Viskositätsmodifizierung, wie z. B. Verdicker, enthalten ist.

14. Granulat nach mindestens einem der vorstehenden Ansprüche, **dadurch gekennzeichnet, dass** Hilfs- und Zusatzstoffe in Mengen von bis zu 40 Gew.-%, vorzugsweise bis zu 20 Gew.-%, insbesondere bevorzugt bis zu 5 Gew.-%, bezogen auf das Gewicht der Granulate, enthalten sind.

15. Granulat nach mindestens einem der vorstehenden Ansprüche, **dadurch gekennzeichnet, dass** als Hilfs- und Zusatzstoff mindestens eine Verbindung ausgewählt aus den Filmbildungshilfsmitteln und Filmmodifizierungsmitteln, vorzugsweise auf der Basis von Verbindungen der allgemeinen Formel HO-CₙH₂ₙ-O-(CₙH₂ₙ-O)ₘH, worin n eine Zahl von 2 bis 4, vorzugsweise 2 oder 3, und m eine Zahl von 0 bis 500 ist, wobei Ethylenglycol, Propylenglycol, Di-, Tri- und Tetraethylenglycol, Di-, Tri- und Tetrapropylenglycol, Polyethylenoxide, Polypropylenoxid und Ethylenoxid/Propylenoxid-Mischpolymere mit Molgewichten bis ca. 15000 und statistischer oder blockartigen Verteilung der Ethylenoxid und Propylenoxid-Baugruppen besonders bevorzugt sind.

16. Granulat nach mindestens einem der vorstehenden Ansprüche, **dadurch gekennzeichnet, dass** als Hilfs- und Zusatzstoff mindestens eine Verbindung ausgewählt aus den Stabilisatoren gegen UV-Strahlung und Wettereinflüsse, vorzugsweise ausgewählt aus der Gruppe, die Derivate des 2,4-Dihydroxybenzophenons, Derivate des 2-Cyan-3,3'-diphenylacrylats, Derivate des 2,2',4,4'-Tetrahydroxybenzophenons, Derivate des o-Hydroxyphenyl-benztriazols, Salicylsäureester, o-Hydroxyphenyl-s-triazine und sterisch gehinderte Amine sowie Gemische aus diesen Verbindungen enthält.

17. Dispersion enthaltend
(a) Kern-Mantel-Partikel nach mindestens einem der Ansprüche 1 bis 11
(b) mindestens ein Lösungs- oder Dispergiermittel und
(c) gegebenenfalls Dispergierhilfsmittel.

18. Dispersion nach Anspruch 17, **dadurch gekennzeichnet, dass** die Dispersion mindestens ein Dispergierhilfsmittel enthält, wobei als Dispergierhilfsmittel vorzugsweise wasserlösliche hochmolekulare organische Verbindungen mit polaren Gruppen, wie Polyvinylpyrrolidon, Copolymerisate aus Vinylpropionat oder -acetat und Vinypyrrolidon, teilverseifte Copolymeriste aus einem Acrylester und Acrylnitril, Polyvinylalkohole mit unterschiedlichem Restacetat-Gehalt, Zelluloseether, Gelatine, Blockcopolymere, modifizierte Stärke, niedermolekulare, carbon- und/oder sulfonsäuregruppenhaltigen Polymerisate oder Mischungen dieser Stoffe eingesetzt werden, wobei der Anteil des Dispergierhilfsmittels an der Dispersion vorzugsweise im Bereich von 0,01 bis 10 Gew.-%, insbesondere bevorzugt im Bereich von 0,5 bis 5 Gew.-% liegt.

19. Dispersion nach mindestens einem der vorstehenden Ansprüche, **dadurch gekennzeichnet, dass** die Dispersion mindestens ein Schutzkolloid enthält, wobei als Schutzkolloid vorzugsweise Polyvinylalkohole mit einem Restacetat-Gehalt von unter 35, insbesondere 5 bis 39 Mol.-% und/oder Vinylpyrrolidon-Ninylpropionat-Copolymere mit einem Vinylestergehalt von unter 35, insbesondere 5 bis 30 Gew.-%, eingesetzt werden.

20. Dispersion nach mindestens einem der vorstehenden Ansprüche, **dadurch gekennzeichnet, dass** die Dispersion mindestens einen nichtionischen oder ionischen Emulgator enthält, wobei als Emulgator vorzugsweise ethoxylierte oder propoxylierte, längerkettige Alkanole oder Alkylphenole mit unterschiedlichen Ethoxylierungs- bzw. Propoxylierungsgraden (z. B. Addukte mit 0 bis 50 mol Alkylenoxid) bzw. deren neutralisierte, sulfatierte, sulfonierte oder phosphatierte Derivate, insbesondere neutralisierte Dialkylsulfobernsteinsäureester oder Alkyldiphenyloxid-disulfonate eingesetzt werden, wobei der Einsatz nichtionischer Emulgatoren und insbesondere der Einsatz ethoxylierter Alkylphenole bevorzugt ist.

21. Dispersion nach mindestens einem der vorstehenden Ansprüche, **dadurch gekennzeichnet, dass** die Dispersion mindestens einen nichtionischen oder ionischen Emulgator und mindestens ein Schutzkolloid enthält.

22. Verfahren zur Herstellung von Dispersionen gemäß mindestens einem der Ansprüche 17 bis 21 durch
a) Oberflächenbehandlung dispergierter monodisperser Kerne,
b) Aufbringen des Mantels aus organischen Polymeren auf die behandelten Kerne aus a).

23. Verfahren zur Herstellung von Dispersionen nach Anspruch 22, **dadurch gekennzeichnet, dass** die monodispersen Kerne in einem Schritt a1) durch Emulsionspolymerisation erhalten werden und in einem Schritt a2) eine vernetzte polymere Zwischenschicht, vorzugsweise durch Emulsionspolymerisation oder durch ATR-Polymerisation, auf die Kerne aufgebracht wird, die vorzugsweise reaktive Zentren aufweist, an die der Mantel kovalent angebunden werden kann.

24. Verfahren zur Herstellung von Dispersionen nach mindestens einem der vorstehenden Ansprüche, **dadurch gekennzeichnet, dass** es sich bei Schritt b) um eine Aufpropfung, vorzugsweise durch Emulsionspolymerisation oder ATR-Polymerisation handelt.

25. Verfahren zur Herstellung von Dispersionen nach mindestens einem der Ansprüche 22 oder 23, **dadurch gekennzeichnet, dass** der anorganische Kern vor der Aufpolymerisation des Mantels einer Vorbehandlung unterzogen wird, die ein Anbinden des Mantels ermöglicht.

26. Verfahren zur Herstellung von Granulaten enthaltend Kern-Mantel-Partikel, **dadurch gekennzeichnet, dass** eine Dispersion nach mindestens einem der Ansprüche 22 bis 25 getrocknet und compoundiert wird.

## Claims

1. Core/shell particles whose core is essentially solid and has an essentially monodisperse size distribution, where there is a difference between the refractive indices of the core material and the shell material, and the core consists of a material which is either not flowable or becomes flowable at a temperature above the melting point of the shell material, and the shell is bonded to the core via an interlayer, **characterised in that** the shell consists of a copolymer which comprises at least one C₄-C₈-alkyl acrylate and at least one C₄-C₈-alkyl or -alkylaryl methacrylate as monomer units.

2. Core/shell particles according to Claim 1, **characterised in that** the shell comprises
(a) 10 to 70% by weight, preferably 25 to 60% by weight and particularly preferably 35 to 55% by weight of C₄-C₈-alkyl acrylate,
(b) 10 to 80% by weight, preferably 25 to 70% by weight and particularly preferably 35 to 60% by weight of C₄-C₈-alkyl or -alkylaryl methacrylate,
(c) 0.5 to 40% by weight, preferably 1 to 30% by weight and particularly preferably 5 to 20% by weight of methyl methacrylate,
in each case based on the weight ratio of the monomer units, as monomer units.

3. Core/shell particles according to at least one of Claims 1 or 2, **characterised in that** the at least one C₄-C₈-alkyl acrylate is selected from the group n-butyl acrylate, isobutyl acrylate, sec-butyl acrylate, n-propyl acrylate, n-pentyl acrylate, n-hexyl acrylate, n-octyl acrylate, where the at least one C₄-C₈-alkyl acrylate is preferably n-butyl acrylate.

4. Core/shell particles according to at least one of the preceding claims, **characterised in that** the at least one C₄-C₈-alkyl or -alkylaryl methacrylate is selected from the group n-butyl methacrylate, isobutyl methacrylate, sec-butyl methacrylate, n-propyl methacrylate, n-pentyl methacrylate, n-hexyl methacrylate, cyclohexyl methacrylate, n-octyl methacrylate, benzyl methacrylate, where the at least one C₄-C₈-alkyl acrylate is preferably n-butyl methacrylate.

5. Core/shell particles according to at least one of the preceding claims, **characterised in that** the shell is formed by a random copolymer, which is preferably built up from n-butyl acrylate, n-butyl methacrylate and methyl methacrylate.

6. Core/shell particles according to at least one of the preceding claims, **characterised in that** the shell is grafted onto the core via an at least partially crosslinked interlayer.

7. Core/shell particles according to at least one of the preceding claims, **characterised in that** the core consists of an organic polymer, which is preferably crosslinked, where the core particularly preferably consists of crosslinked polystyrene or a copolymer of methyl methacrylate and styrene.

8. Core/shell particles according to at least one of Claims 1 to 6, **characterised in that** the core consists of an inorganic material, preferably a metal or semimetal or a metal chalcogenide or metal pnictide, particularly preferably silicon dioxide.

9. Core/shell particles according to at least one of the preceding claims, **characterised in that** the core/shell particles have a mean particle diameter in the range from about 5 nm to about 2000 nm, preferably in the range from about 5 to 20 nm or in the range 100 - 500 nm.

10. Core/shell particles according to at least one of the preceding claims, **characterised in that** the core:shell weight ratio is in the range from 2:1 to 1:5, preferably in the range from 3:2 to 1:3 and particularly preferably in the range less than 1.2:1.

11. Core/shell particles according to at least one of the preceding claims, **characterised in that** the difference between the refractive indices of the core material and the shell material is at least 0.001, preferably at least 0.01 and particularly preferably at least 0.1.

12. Granules comprising core/shell particles according to at least one of Claims 1 to 11 and optionally assistants and additives.

13. Granules according to Claim 12, **characterised in that** present as assistant and additive is at least one compound selected from the groups antioxidants, UV stabilisers, biocides, plasticisers, film-formation assistants, flow-control agents, fillers, melting assistants, adhesives, release agents, application assistants, demoulding assistants, viscosity modifiers, such as, for example, thickeners.

14. Granules according to at least one of the preceding claims, **characterised in that** assistants and additives are present in amounts of up to 40% by weight, preferably up to 20% by weight, particularly preferably up to 5% by weight, based on the weight of the granules.

15. Granules according to at least one of the preceding claims, **characterised in that** present as assistant and additive is at least one compound selected from the film-formation assistants and film modifiers, preferably based on compounds of the general formula HO-CₙH₂ₙ-O-(CₙH₂ₙ-O)ₘH, in which n is a number from 2 to 4, preferably 2 or 3, and m is a number from 0 to 500, where ethylene glycol, propylene glycol, di-, tri- and tetraethylene glycol, di-, tri- and tetrapropylene glycol, polyethylene oxides, polypropylene oxide and ethylene oxide-propylene oxide copolymers having molecular weights up to about 15,000 and a random or block-like distribution of the ethylene oxide and propylene oxide groups are particularly preferred.

16. Granules according to at least one of the preceding claims, **characterised in that** present as assistant and additive is at least one compound selected from the stabilisers against UV radiation and weathering influences, preferably selected from the group which comprises derivatives of 2,4-dihydroxybenzophenone, derivatives of 2-cyano-3,3'-diphenyl acrylate, derivatives of 2,2',4,4'-tetrahydroxybenzophenone, derivatives of o-hydroxyphenylbenzotriazole, salicylates, o-hydroxyphenyl-s-triazines and sterically hindered amines, and mixtures of these compounds.

17. Dispersion comprising
(a) core/shell particles according to at least one of Claims 1 to 11,
(b) at least one solvent or dispersion medium and
(c) optionally dispersion aids.

18. Dispersion according to Claim 17, **characterised in that** the dispersion comprises at least one dispersion aid, where the dispersion aids employed are preferably water-soluble, high-molecular-weight organic compounds containing polar groups, such as polyvinylpyrrolidone, copolymers of vinyl propionate or acetate and vinylpyrrolidone, partially saponified copolymers of an acrylate and acrylonitrile, polyvinyl alcohols having different residual acetate contents, cellulose ethers, gelatine, block copolymers, modified starch, low-molecular-weight polymers containing carboxyl and/or sulfonyl groups, or mixtures of these substances, where the proportion of dispersion aid in the dispersion is preferably in the range from 0.01 to 10% by weight, particularly preferably in the range from 0.5 to 5% by weight.

19. Dispersion according to at least one of the preceding claims, **characterised in that** the dispersion comprises at least one protective colloid, where the protective colloid employed is preferably polyvinyl alcohols having a residual acetate content of less than 35 mol%, in particular 5 to 39 mol%, and/or vinylpyrrolidone-vinyl propionate copolymers having a vinyl ester content of less than 35% by weight, in particular 5 to 30% by weight.

20. Dispersion according to at least one of the preceding claims, **characterised in that** the dispersion comprises at least one nonionic or ionic emulsifier, where the emulsifier employed is preferably ethoxylated or propoxylated, relatively long-chain alkanols or alkylphenols having different degrees of ethoxylation or propoxylation (for example adducts with 0 to 50 mol of alkylene oxide) or neutralised, sulfated, sulfonated or phosphated derivatives thereof, in particular neutralised dialkyl-sulfosuccinic acid esters or alkyldiphenyl oxide disulfonates, where the use of nonionic emulsifiers and in particular the use of ethoxylated alkylphenols is preferred.

21. Dispersion according to at least one of the preceding claims, **characterised in that** the dispersion comprises at least one nonionic or ionic emulsifier and at least one protective colloid.

22. Process for the preparation of dispersions according to at least one of Claims 17 to 21 by
a) surface treatment of dispersed monodisperse cores,
b) application of the shell comprising organic polymers to the treated cores from a).

23. Process for the preparation of dispersions according to Claims 22, **characterised in that** the monodisperse cores are obtained by emulsion polymerisation in a step a1), and a crosslinked polymeric interlayer, which preferably has reactive centres to which the shell can be covalently bonded, is applied to the cores, preferably by emulsion polymerisation or by ATR polymerisation, in a step a2).

24. Process for the preparation of dispersions according to at least one of the preceding claims, **characterised in that** step b) is a grafting, preferably by emulsion polymerisation or ATR polymerisation.

25. Process for the preparation of dispersions according to at least one of Claims 22 or 23, **characterised in that** the inorganic core is subjected to pre-treatment which enables bonding of the shell before the shell is polymerised on.

26. Process for the preparation of granules comprising core/shell particles, **characterised in that** a dispersion according to at least one of Claims 22 to 25 is dried and compounded.

## Revendications

1. Particules coeur/enveloppe dont le coeur est essentiellement solide et présente une distribution de taille essentiellement monodispersée, où il existe une différence entre les indices de réfraction du matériau de coeur et le matériau d'enveloppe, et le coeur est constitué d'un matériau qui est non écoulable, ou bien qui devient écoulable à une température supérieure au point de fusion du matériau d'enveloppe, et l'enveloppe est liée au coeur par l'intermédiaire d'une couche intermédiaire, **caractérisées en ce que** l'enveloppe est constituée d'un copolymère comprenant au moins un acrylate de C₄-C₈-alkyle et au moins un méthacrylate de C₄-C₈-alkyle ou -alkylaryle comme motifs monomères.

2. Particules coeur/enveloppe selon la revendication 1, **caractérisées en ce que** l'enveloppe comprend
(a) de 10 à 70% en poids, préférablement de 25 à 60% en poids et particulièrement préférablement de 35 à 55% en poids d'acrylate de C₄-C₈-alkyle,
(b) de 10 à 80% en poids, préférablement de 25 à 70% en poids et particulièrement préférablement de 35 à 60% en poids de méthacrylate de C₄-C₈-alkyle ou -alkylaryle,
(c) de 0,5 à 40% en poids, préférablement de 1 à 30% en poids et particulièrement préférablement de 5 à 20% en poids de méthacrylate de méthyle,
dans chaque cas sur la base du rapport pondéral des motifs monomères, comme motifs monomères.

3. Particules coeur/enveloppe selon au moins l'une des revendications 1 ou 2, **caractérisées en ce que** le au moins un acrylate de C₄-C₈-alkyle est choisi parmi le groupe constitué par l'acrylate de n-butyle, l'acrylate d'isobutyle, !'acrylate de sec-butyle, l'acrylate de n-propyle, l'acrylate de n-pentyle, l'acrylate de n-hexyle, l'acrylate de n-octyle, où le au moins un acrylate de C₄-C₈-alkyle est préférablement l'acrylate de n-butyle.

4. Particules coeur/enveloppe selon au moins l'une des revendications précédentes, **caractérisées en ce que** le au moins un méthacrylate de C₄-C₈-alkyle ou -alkylaryle est choisi parmi le groupe constitué par le méthacrylate de n-butyle, le méthacrylate d'isobutyle, le méthacrylate de sec-butyle, le méthacrylate de n-propyle, le méthacrylate de n-pentyle, le méthacrylate de n-hexyle, le méthacrylate de cyclohexyle, le méthacrylate de n-octyle, le méthacrylate de benzyle, où le au moins un acrylate de C₄-C₈-alkyle est préférablement le méthacrylate de n-butyle.

5. Particules coeur/enveloppe selon au moins l'une des revendications précédentes, **caractérisées en ce que** l'enveloppe est formée par un copolymère statistique, qui est de préférence constitué d'acrylate de n-butyle, de méthacrylate de n-butyle et de méthacrylate de méthyle.

6. Particules coeur/enveloppe selon au moins l'une des revendications précédentes, **caractérisées en ce que** l'enveloppe est greffée sur le coeur par l'intermédiaire d'au moins une couche intermédiaire partiellement réticulée.

7. Particules coeur/enveloppe selon au moins l'une des revendications précédentes, **caractérisées en ce que** le coeur est constitué d'un polymère organique, qui est de préférence réticulé, où le coeur est constitué particulièrement préférablement de polystyrène réticulé ou d'un copolymère de méthacrylate de méthyle et de styrène.

8. Particules coeur/enveloppe selon au moins l'une des revendications 1 à 6, **caractérisées en ce que** le coeur est constitué d'un matériau inorganique, préférablement un métal ou semi-métal ou un chalcogénure de métal ou un pnicture de métal, particulièrement préférablement le dioxyde de silicium.

9. Particules coeur/enveloppe selon au moins l'une des revendications précédentes, **caractérisées en ce que** les particules coeur/enveloppe ont un diamètre moyen de particules dans la plage allant d'environ 5 nm à environ 2000 nm, préférablement dans la plage allant d'environ 5 à 20 nm ou dans la plage 100 - 500 nm.

10. Particules coeur/enveloppe selon au moins l'une des revendications précédentes, **caractérisées en ce que** le rapport pondéral coeur:enveloppe se trouve dans la plage allant de 2:1 à 1:5, préférablement dans la plage allant de 3:2 à 1:3 et particulièrement préférablement dans la plage inférieure à 1,2:1.

11. Particules coeur/enveloppe selon au moins l'une des revendications précédentes, **caractérisées en ce que** la différence entre les indices de réfraction du matériau de coeur et du matériau d'enveloppe est d'au moins 0,001, préférablement d'au moins 0,01 et particulièrement préférablement d'au moins 0,1.

12. Granulés comprenant des particules coeur/enveloppe selon au moins l'une des revendications 1 à 11, et éventuellement des auxiliaires et des additifs.

13. Granulés selon la revendication 12, **caractérisés en ce que**, comme auxiliaire et additif présent, on trouve au moins un composé choisi parmi le groupe constitué par les antioxydants, les stabilisants anti-UV, les biocides, les plastifiants, les auxiliaires filmogènes, les agents de contrôle de l'écoulement, les charges, les auxiliaires de fusion, les adhésifs, les agents anti-adhésion, les auxiliaires d'application, les auxiliaires de démoulage, les agents modifiant la viscosité, tels que par exemple les épaississants.

14. Granulés selon au moins l'une des revendications précédentes, **caractérisés en ce que** les auxiliaires et les additifs sont présents en des quantités allant jusqu'à 40% en poids, préférablement jusqu'à 20% en poids, particulièrement préférablement jusqu'à 5% en poids, sur la base du poids des granulés.

15. Granulés selon au moins l'une des revendications précédentes, **caractérisés en ce que**, comme auxiliaire et additif présent, on trouve au moins un composé choisi parmi le groupe constitué par les auxiliaires filmogènes et les modificateurs de film, préférablement à base de composés de formule générale HO-CₙH₂ₙ-O-(CₙH₂ₙ-O)ₘH, dans laquelle n est un nombre allant de 2 à 4, préférablement 2 ou 3, et m est un nombre allant de 0 à 500, où l'éthylène glycol, le propylène glycol, le di-, tri- et tétraéthylène glycol, le di-, tri- et tétrapropylène glycol, les oxydes de polyéthylène, l'oxyde de polypropylène et les copolymères d'oxyde d'éthylène-oxyde de propylène ayant des poids moléculaires allant jusqu'à environ 15 000 et une distribution statistique ou en bloc des groupements d'oxyde d'éthylène et d'oxyde de propylène sont particulièrement préférés.

16. Granulés selon au moins l'une des revendications précédentes, **caractérisés en ce que**, comme auxiliaire et additif présent, on trouve au moins un composé choisi parmi le groupe constitué par stabilisants anti-rayonnement UV et contre les influences de vieillissement, préférablement choisi parmi le groupe comprenant les dérivés de 2,4-dihydroxybenzophénone, les dérivés d'acrylate de 2-cyano-3,3'-diphényle, les dérivés de 2,2',4,4'-tétrahydroxybenzophénone, les dérivés d'o-hydroxyphénylbenzotriazole, les salicylates, les o-hydroxyphényl-s-triazines et les amines stériquement encombrées, et des mélanges de ces composés.

17. Dispersion comprenant
(a) des particules coeur/enveloppe selon au moins l'une des revendications 1 à 11,
(b) au moins un solvant ou milieu de dispersion et
(c) éventuellement des auxiliaires de dispersion.

18. Dispersion selon la revendication 17, **caractérisée en ce que** la dispersion comprend au moins un auxiliaire de dispersion, où les auxiliaires de dispersion employés sont de préférence des composés organiques hydrosolubles de haut poids moléculaire contenant des groupements polaires, tels que la polyvinylpyrrolidone, les copolymères de propionate ou d'acétate de vinyle et de vinylpyrrolidone, les copolymères partiellement saponifiés d'un acrylate et d'acrylonitrile, les alcools polyvinyliques ayant des teneurs en acétate résiduel différentes, les éthers de cellulose, la gélatine, les copolymères blocs, l'amidon modifié, les polymères de bas poids moléculaire contenant des groupements carboxyle et/ou sulfonyle, ou des mélanges de ces substances, où la proportion d'auxiliaire de dispersion dans la dispersion est préférablement dans la plage allant de 0,01 à 10% en poids, particulièrement préférablement dans la plage allant de 0,5 à 5% en poids.

19. Dispersion selon au moins l'une des revendications précédentes, **caractérisée en ce que** la dispersion comprend au moins un colloïde protecteur, où le colloïde protecteur employé est constitué préférablement d'alcools polyvinyliques ayant une teneur en acétate résiduel inférieure à 35% molaire, en particulier de 5 à 39% molaire, et/ou de copolymères de vinylpyrrolidone-propionate de vinyle ayant une teneur en ester vinylique inférieure à 35% en poids, en particulier de 5 à 30% en poids.

20. Dispersion selon au moins l'une des revendications précédentes, **caractérisée en ce que** la dispersion comprend au moins un émulsifiant non ionique ou ionique, où l'émulsifiant employé est constitué préférablement d'alcanols ou d'alkylphénols éthoxylés ou propoxylés à chaîne relativement longue, ayant différents degrés d'éthoxylation ou de propoxylation (par exemple des produits d'addition ayant de 0 à 50 mol d'oxyde d'alkylène) ou des dérivés neutralisés, sulfatés, sulfonatés ou phosphatés de ceux-ci, en particulier des esters d'acide dialkylsulfosuccinique neutralisés ou des disulfonates d'oxyde d'alkyldiphényle, où l'utilisation d'émulsifiants non ioniques et en particulier l'utilisation d'alkylphénols éthoxylés est préférée.

21. Dispersion selon au moins l'une des revendications précédentes, **caractérisée en ce que** la dispersion comprend au moins un émulsifiant non ionique ou ionique et au moins un colloïde protecteur.

22. Procédé de préparation de dispersions selon au moins l'une des revendications 17 à 21 au moyen
a) du traitement de surface de coeurs monodispersés dispersés,
b) de l'application de l'enveloppe comprenant des polymères organiques aux coeurs traités issus de a).

23. Procédé de préparation de dispersions selon la revendication 22, **caractérisé en ce que** les coeurs monodispersés sont obtenus par polymérisation en émulsion dans une étape a1), et une couche intermédiaire polymère réticulée, qui possède de préférence des centres réactifs auxquels l'enveloppe peut être liée de façon covalente, est appliquée aux coeurs, préférablement par polymérisation en émulsion ou par polymérisation radicalaire par transfert d'atome, dans une étape a2).

24. Procédé de préparation de dispersions selon au moins l'une des revendications précédentes, **caractérisé en ce que** l'étape b) est un greffage, préférablement par polymérisation en émulsion ou par polymérisation radicalaire par transfert d'atome.

25. Procédé de préparation de dispersions selon au moins l'une des revendications 22 ou 23, **caractérisé en ce que** le coeur inorganique est soumis à un prétraitement qui permet la fixation de l'enveloppe avant la polymérisation sur l'enveloppe.

26. Procédé de préparation de granulés comprenant des particules coeur/enveloppe, **caractérisé en ce qu'**une dispersion selon au moins l'une des revendications 22 à 25 est séchée et compoundée.
